# EUROPEAN PATENT APPLICATION

(11) **EP 4 827 082 A1**
(43) Date of publication of application: **21.10.2026**
(21) Application number: 26172462.9
(22) Date of filing: 15.04.2026
(51) Int. Cl.: H04N 9/31

(54) **IMAGE PROJECTION METHOD, NON-TRANSITORY COMPUTER-READABLE STORAGE MEDIUM STORING PROGRAM, AND INFORMATION PROCESSING APPARATUS**

(30) Priority: 16.04.2025 JP 2025067317
(71) Applicant: Seiko Epson Corporation, Tokyo 160-8801 (JP)
(72) Inventor: OKANO, Shuji, Suwa-shi, 392-8502 (JP)
(74) Representative: Lewis Silkin LLP

(57) **Abstract**

According to an aspect of the present disclosure, there is provided an image projection method including projecting a tiled image onto a projection surface, the tiled image including a first image projected by a first projector and a second image projected by a second projector, when the tiled image is projected onto the projection surface, acquiring first information for controlling an operation of a first optical zoom mechanism provided in the first projector, controlling the operation of the first optical zoom mechanism to a zoom amount corresponding to the first information, controlling an operation of a second optical zoom mechanism provided in the second projector to the zoom amount corresponding to the first information, and moving a position of one or both of the first image and the second image in a direction for offsetting a change in a distance between the first image and the second image due to the controlling the operation of the first optical zoom mechanism and the controlling the operation of the second optical zoom mechanism.

## Description

The present application is based on, and claims priority from JP Application Serial Number 2025-067317, filed April 16, 2025, the disclosure of which is hereby incorporated by reference herein in its entirety.

### BACKGROUND

### 1. Technical Field

The present disclosure relates to an image projection method, a non-transitory computer-readable storage medium storing a program, and an information processing apparatus.

### 2. Related Art

JP-A-2023-65804 describes a configuration in which a control device controls a main projector and a sub-projector to thereby perform stack projection or multi-projection. In this configuration, the control device causes each of the main projector and the sub-projector to simultaneously perform an adjustment operation for changing at least one of the position and the size of a projection image. During the adjustment operation, the control device differentiates the projection image of the sub-projector from that before the adjustment operation or disables the sub-projector to project an image.

JP-A-2023-65804 is an example of the related art.

JP-A-2023-65804 describes that a projection position or size adjustment operation of the main projector is executed according to adjustment operation and a projection position or size adjustment operation of the sub-projector is further executed in the same manner. However, when the size of an image is changed by a zoom mechanism during the multi-projection, a state of the multi-projection cannot be brought close to an original state of the multi-projection even if the projectors are caused to perform the same adjustment. For this reason, with the technique described in JP-A-2023-65804, it is difficult to zoom the image during the multi-projection.

### SUMMARY

According to an aspect of the present disclosure, there is provided an image projection method including: projecting a tiled image onto a projection surface, the tiled image including a first image projected by a first projector and a second image projected by a second projector, a part of the second image overlapping the first image and another part of the second image not overlapping the first image; when the tiled image is projected onto the projection surface, acquiring first information for controlling an operation of a first optical zoom mechanism provided in the first projector; controlling the operation of the first optical zoom mechanism to a zoom amount corresponding to the first information; controlling an operation of a second optical zoom mechanism provided in the second projector to the zoom amount corresponding to the first information; and moving a position of one or both of the first image and the second image in a direction for offsetting a change in a distance between the first image and the second image due to the controlling the operation of the first optical zoom mechanism and the controlling the operation of the second optical zoom mechanism.

According to an aspect of the present disclosure, there is provided a non-transitory computer-readable storage medium storing a program for causing at least one processor to execute: projecting a tiled image onto a projection surface, the tiled image including a first image projected by a first projector and a second image projected by a second projector, a part of the second image overlapping the first image and another part of the second image not overlapping the first image; when the tiled image is projected onto the projection surface, acquiring first information for controlling an operation of a first optical zoom mechanism provided in the first projector; controlling the operation of the first optical zoom mechanism to a zoom amount corresponding to the first information; controlling an operation of a second optical zoom mechanism provided in the second projector to the zoom amount corresponding to the first information; and moving a position of one or both of the first image and the second image in a direction for offsetting a change in a distance between the first image and the second image due to the controlling the operation of the first optical zoom mechanism and the controlling the operation of the second optical zoom mechanism.

According to an aspect of the present disclosure, there is provided an information processing apparatus including at least one processor configured to execute: projecting a tiled image onto a projection surface, the tiled image including a first image projected by a first projector and a second image projected by a second projector, a part of the second image overlapping the first image and another part of the second image not overlapping the first image; when the tiled image is projected onto the projection surface, acquiring first information for controlling an operation of a first optical zoom mechanism provided in the first projector; controlling the operation of the first optical zoom mechanism to a zoom amount corresponding to the first information; controlling an operation of a second optical zoom mechanism provided in the second projector to the zoom amount corresponding to the first information; and moving a position of one or both of the first image and the second image in a direction for offsetting a change in a distance between the first image and the second image due to the controlling the operation of the first optical zoom mechanism and the controlling the operation of the second optical zoom mechanism.

### BRIEF DESCRIPTION OF THE DRAWINGS

FIG. 1 is a diagram illustrating an overview of a system used for an image projection method according to an embodiment.
FIG. 2 is a block diagram of a first projector.
FIG. 3 is a diagram illustrating a tiled image.
FIG. 4 is a diagram illustrating a relationship between the tiled image and projectable regions of projectors.
FIG. 5 is a diagram illustrating a case in which each of a first image and a second image is simply reduced in size.
FIG. 6 is a diagram illustrating the tiled image after lens shift corresponding to a zoom amount.
FIG. 7 is a diagram illustrating the tiled image after zooming of the image projection method according to the embodiment.
FIG. 8 is a flowchart of the image projection method according to the embodiment.
FIG. 9 is a diagram illustrating acquisition of first shape information.
FIG. 10 is a diagram illustrating acquisition of third correction information.
FIG. 11 is a diagram illustrating input of a reference position.
FIG. 12 is a diagram illustrating another example of the input of the reference position.
FIG. 13 is a diagram illustrating a relationship between lens shift corresponding to a change in a zoom amount and a superimposition region.
FIG. 14 is a diagram illustrating input of the reference position in the case in which the tiled image includes four images.
FIG. 15 is a diagram of input of the reference position in the case in which the tiled image includes nine images.
FIG. 16 is a diagram illustrating the input of the reference position in the case in which the tiled image includes the nine images.

### DESCRIPTION OF EMBODIMENTS

A preferred embodiment according to the present disclosure is explained below with reference to the accompanying drawings. In the drawings, the dimensions and the scales of units are different from actual ones as appropriate and some portions are schematically illustrated in order to facilitate understanding. The scope of the present disclosure is not limited to the embodiment unless the following explanation particularly includes a description to the effect that the present disclosure is limited.

### 1. Embodiment

### 1-1. Overview of a system used for an image projection method

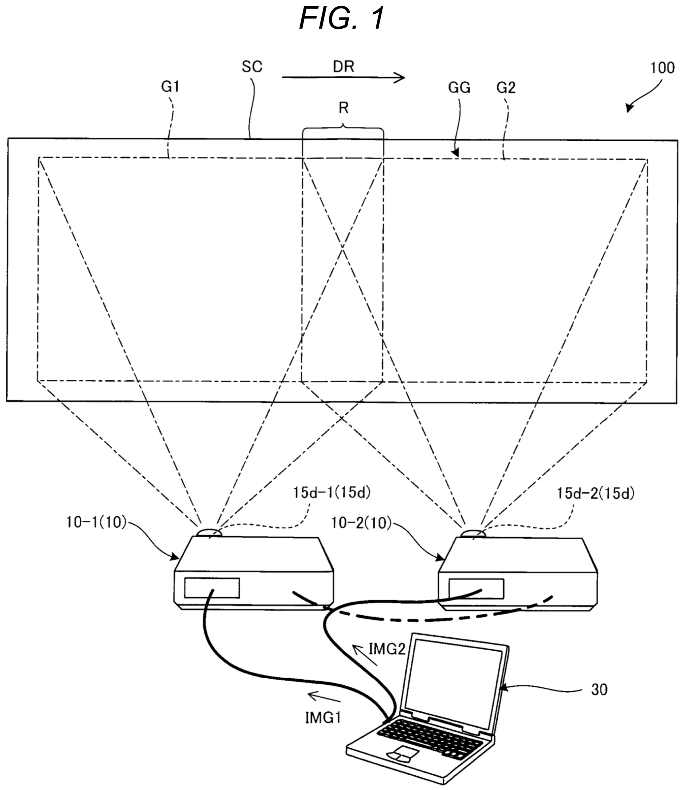

FIG. 1 is a diagram illustrating an overview of a system 100 used for an image projection method according to an embodiment. The system 100 is a multi-projection system that projects a tiled image GG onto a projection surface SC.

The system 100 includes, as illustrated in FIG. 1, a first projector 10-1, a second projector 10-2, and a terminal device 30. The first projector 10-1 is an example of an "information processing apparatus". In the following explanation, the first projector 10-1 and the second projector 10-2 are sometimes referred to as projectors 10 without being distinguished from each other.

The system 100 projects the tiled image GG onto the projection surface SC using a plurality of projectors 10. In an example illustrated in FIG. 1, the system 100 projects the tiled image GG onto the projection surface SC using two projectors 10. The projection surface SC is the surface of an object such as a screen. In the example illustrated in FIG. 1, the projection surface SC is a plane.

The projection surface SC is not limited to the plane and may be, for example, a curved surface. In the present embodiment, an aspect in which the number of projectors 10 provided in the system 100 is two is exemplified. However, the present disclosure is not limited to this aspect and the number may be three or more. That is, the tiled image GG may include images projected from three or more projectors 10.

The projector 10-1 is a display apparatus that projects, onto the projection surface SC, a first image G1 indicated by video data IMG1 output from the terminal device 30. The second projector 10-2 is a display apparatus that projects, onto the projection surface SC, a second image G2 indicated by video data IMG2 output from the terminal device 30.

The first image G1 is projected onto the projection surface SC from the first projector 10-1 and the second image G2 is projected onto the projection surface SC from the second projector 10-2 as explained above, whereby the tiled image GG including the first image G1 and the second image G2 is projected onto the projection surface SC. The first image G1 and the second image G2 are arranged in this order in an arrangement direction DR. Here, the first image G1 and the second image G2 are projected onto the projection surface SC in a state of being joined to each other such that the tiled image GG displays one image. In the example illustrated in FIG. 1, the first image G1 is projected onto a region on the left side in FIG. 1 of the projection surface SC and the second image G2 is projected onto a region on the right side in FIG. 1 of the projection surface SC. The end portion on the right side in FIG. 1 of the first image G1 and the end portion on the left side in FIG. 1 of the second image G2 are joined to each other. That is, the end portion on the right side in FIG. 1 of the first image G1 overlaps the end portion on the left side in FIG. 1 of the second image G2.

In the tiled image GG, a part of the second image G2 overlaps the first image G1 and the other part of the second image G2 does not overlap the first image G1. Parts of the first image G1 and the second image G2 overlap each other in a superimposition region R. The superimposition region R is a region to which blend processing explained below for making a joint of the first image G1 and the second image G2 less conspicuous is applied. As explained above, in the system 100, the superimposition region R for the parts of the first image G1 projected from the first projector 10-1 and the second image G2 projected from the second projector 10-2 to overlap each other on the projection surface SC is set.

The first projector 10-1 has a zoom function of enlarging or reducing the first image G1 on the projection surface SC. Similarly, the second projector 10-2 has a zoom function of enlarging or reducing the second image G2 on the projection surface SC.

The first projector 10-1 has a lens shift function of changing the position of the first image G1 on the projection surface SC while keeping the position and the posture of the first projector 10-1 with respect to the projection surface SC fixed. Similarly, the second projector 10-2 has a lens shift function of changing the position of the second image G2 on the projection surface SC while keeping the position and the posture of the second projector 10-2 with respect to the projection surface SC fixed. The lens shift function is also called optical shift function.

Further, the first projector 10-1 has a correction function of correcting the shape of the first image G1 on the projection surface SC. Similarly, the second projector 10-2 has the correction function of correcting the shape of the second image G2 on the projection surface SC.

In the present embodiment, the first projector 10-1 is a main machine and controls an operation of the second projector 10-2, which is a sub-machine. The first projector 10-1 appropriately uses the zoom function, the lens shift function, and the correction function of the first projector 10-1 and enlarges or reduces the first image G1 on the projection surface SC to maintain the shape of the tiled image GG on the projection surface SC. By controlling the operation of the second projector 10-2, the first projector 10-1 appropriately uses the zoom function, the lens shift function, and the correction function of the second projector 10-2 and enlarges or reduces the second image G2 on the projection surface SC to maintain the shape of the tiled image GG on the projection surface SC. By enlarging or reducing the first image G1 and the second image G2 on the projection surface SC as explained above, it is possible to enlarge or reduce the tiled image GG on the projection surface SC while maintaining the shape of the tiled image GG on the projection surface SC.

The second projector 10-2 is configured the same as the first projector 10-1 except that the operation of the second projector 10-2 is controlled by the first projector 10-1. The second projector 10-2 only has to have a configuration in which the operation of the second projector 10-2 can be controlled by the first projector 10-1 and may have a configuration different from the configuration of the first projector 10-1. When the number of projectors 10 provided in the system 100 is three or more, among the three or more projectors 10, one projector 10 is a main machine and each of the other two or more projectors 10 is a sub-machine.

The terminal device 30 is a device having a function of dividing video data indicating a single image into a plurality of pieces of video data to be projected by the plurality of projectors 10 and a function of supplying the divided pieces of video data to the projectors 10 corresponding to the pieces of video data.

The terminal device 30 in the present embodiment divides video data indicating one image into video data IMG1 and video data IMG2 and thereafter supplies the video data IMG1 to the first projector 10-1 and supplies the video data IMG2 to the second projector 10-2. The terminal device 30 may supply the video data IMG1 and the video data IMG2 to the first projector 10-1. In this case, the first projector 10-1 supplies the video data IMG2 to the second projector 10-2. The terminal device 30 may supply video data to the first projector 10-1 and the first projector 10-1 may perform the division processing for the video data.

In the example illustrated in FIG. 1, the terminal device 30 is a laptop computer. The terminal device 30 is not limited to the laptop computer and may be, for example, a desktop computer, a smartphone, or a tablet terminal or may be a video player, a digital versatile disk (DVD) player, a Blu-ray disc player, a hard disk recorder, a television tuner, a set-top box for a cable television (CATV), or a video game machine.

### 1-2. Projector

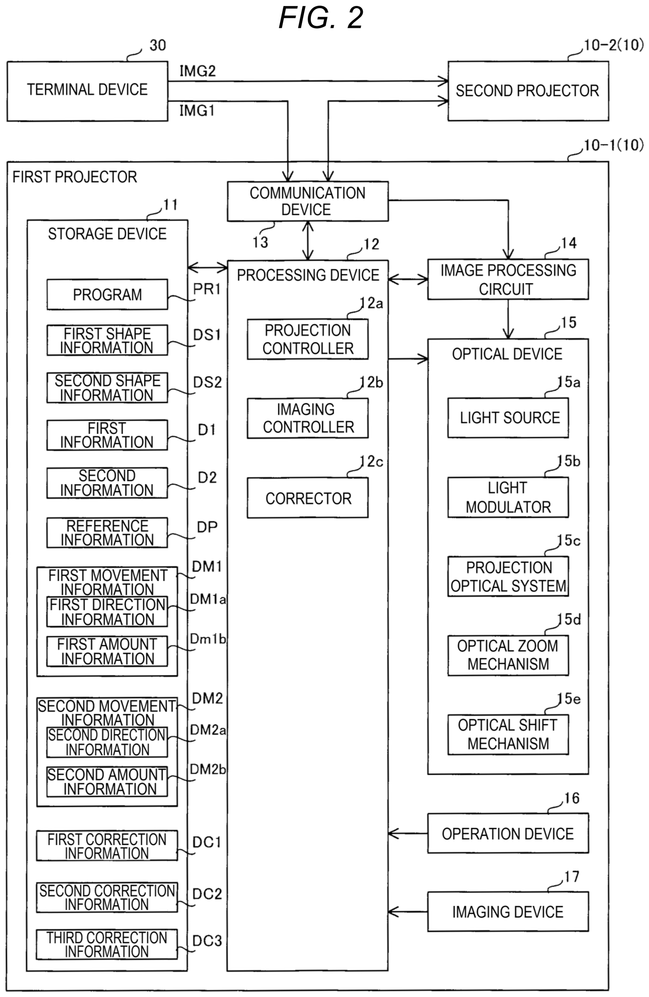

FIG. 2 is a block diagram of the first projector 10-1. In FIG. 2, besides the first projector 10-1, a connection state of the second projector 10-2 and the terminal device 30 to the first projector 10-1 is illustrated. In FIG. 2, the configuration of the first projector 10-1 is representatively illustrated. However, the configuration of the second projector 10-2 is the same as the configuration of the first projector 10-1 except that the second projector 10-2 does not execute a program PR1 explained below. Therefore, in the following explanation of elements of the second projector 10-2, the first projector 10-1 only has to be replaced with the second projector 10-2 and the video data IMG1 only has to be replaced with the video data IMG2.

In the following explanation, concerning the elements of the projectors 10, the elements of the first projector 10-1 and the elements of the second projector 10-2 are sometimes distinguished by adding a suffix "-1" to reference signs of the elements of the first projector 10-1 and adding a suffix "-2" to reference signs of the elements of the second projector 10-2.

As illustrated in FIG. 2, the first projector 10-1 includes a storage device 11, a processing device 12, a communication device 13, an image processing circuit 14, an optical device 15, an operation device 16, and an imaging device 17. These devices are communicably coupled to each other. The processing device 12 is an example of "at least one processor".

The storage device 11 is a storage device that stores a program to be executed by the processing device 12 and data to be processed by the processing device 12. The storage device 11 includes, for example, a hard disk drive or a semiconductor memory. A part or the entire storage device 11 may be provided in a storage device on the outside of the first projector 10-1, a server, or the like.

The storage device 11 stores a program PR1, first shape information DS1, second shape information DS2, first information D1, second information D2, reference information DP, first movement information DM1, second movement information DM2, first correction information DC1, second correction information DC2, and third correction information DC3.

The program PR1 is a program for executing the image projection method explained in detail below.

The first shape information DS1 is information indicating, in the case in which the first projector 10-1 projects the first image G1 with a plurality of control values indicating zoom amounts different from one another of an optical zoom mechanism 15d-1, shapes of the first image G1 at the control values. The plurality of control values correspond to a plurality of positions on the projection surface SC. The first shape information DS1 indicates, in the case in which the first image G1 is projected onto each of the plurality of positions on the projection surface SC from the first projector 10-1, shapes of the first image G1 at the positions. For example, when a target shape of the first image G1 is a quadrangle, the first shape information DS1 is information concerning coordinate values indicating, for each of the positions of the first image G1 on the projection surface SC, a plurality of positions including the positions of the four corners and the positions of the four sides of the first image G1 on the projection surface SC. The coordinate values are, for example, coordinate values of a display coordinate system set in the optical device 15 explained below or a coordinate system associated with the display coordinate system. However, as explained below, the shape of the first image G1 on the projection surface SC is different for each of the positions because of the influence of lens shift and is sometimes a shape deformed from the target shape.

As explained above, the first shape information DS1 indicates a correspondence relationship between each of the plurality of positions of the projection surface SC in the case in which the first image G1 is projected onto the position from the first projector 10-1 and the shape of the first image G1 on the projection surface SC. In other words, the first shape information DS1 indicates, in the case in which the first projector 10-1 projects the first image G1 with a plurality of control values indicating zoom amounts different from one another of the optical zoom mechanism 15d-1, a correspondence relationship between the control values and the shapes of the first image G1 on the projection surface SC. The first shape information DS1 only has to be information directly or indirectly indicating deformation states of the first image G1 at the positions on the projection surface SC and is not limited to the information indicating the coordinate values explained above and may be, for example, imaging data obtained by imaging the first image G1 on the projection surface SC with the imaging device 17, may be information indicating a value such as a variable indicating a degree of deformation of the shape of the first image G1, or may be information indicating a correction value for correcting the first image G1 into a desired shape.

The second shape information DS2 is information indicating, in the case in which the second projector 10-2 projects the second image G2 with a plurality of control values indicating zoom amounts different from one another of the optical zoom mechanism 15d-2, shapes of the second image G2 at the control values. The plurality of control values correspond to the plurality of positions on the projection surface SC and the second shape information DS2 indicates, in the case in which the second image G2 is projected onto the plurality of positions on the projection surface SC from the second projector 10-2, shapes of the second image G2 at the positions. For example, when a target shape of the second image G2 is a quadrangle, the second shape information DS2 is information concerning coordinate values indicating, for each of the positions of the second image G2 on the projection surface SC, a plurality of positions including the positions of the four corners and the positions of the four sides of the second image G2 on the projection surface SC. The coordinate values are, for example, coordinate values of a display coordinate system set in the optical device 15 explained below or a coordinate system associated with the display coordinate system. However, as explained below, the shape of the second image G2 on the projection surface SC is different for each of the positions because of the influence of lens shift and is sometimes a shape deformed from the target shape.

As explained above, the second shape information DS2 indicates a correspondence relationship between the plurality of positions of the projection surface SC and the shape of the second image G2 on the projection surface SC in the case in which the second image G2 is projected onto the positions from the second projector 10-2. In other words, the second shape information DS2 indicates, in the case in which the second projector 10-2 projects the second image G2 with a plurality of control values indicating zoom amounts different from one another of an optical zoom mechanism 15d-2, a correspondence relationship between the control values and the shapes of the second image G2 on the projection surface SC. The second shape information DS2 only has to be information directly or indirectly indicating deformation states of the second image G2 at the positions on the projection surface SC and is not limited to the information indicating the coordinate values explained above and may be, for example, imaging data obtained by imaging the second image G2 on the projection surface SC with the imaging device 17, may be information indicating a value such as a variable indicating a degree of deformation of the shape of the second image G2, or may be information indicating a correction value for correcting the second image G2 into a desired shape.

The first information D1 is information for controlling an operation of the optical zoom mechanism 15d-1 explained below provided in the first projector 10-1. Specifically, the first information D1 is information indicating a control value corresponding to a zoom amount of the optical zoom mechanism 15d-1.

The second information D2 is information for controlling an operation of the optical zoom mechanism 15d-2 explained below provided in the second projector 10-2. Specifically, the second information D2 is information indicating a control value corresponding to a zoom amount of the optical zoom mechanism 15d-2 and indicates a control value corresponding to a zoom amount equal to the zoom amount indicated by the first information D1. Data formats and the like of the first information D1 and the second information D2 may be the same or may be different from each other. The pieces of information included in the first information D1 and the second information D2 may be the same or may be different from each other. When the first information D1 and the second information D2 are common, the first information D1 may also serve as the second information D2.

The reference information DP is information indicating a reference position P0 explained below. The reference position P0 is any position in the tiled image GG and may be, for example, a point represented by a coordinate value of a coordinate system set in the tiled image GG or may be the position of one of a plurality of images constituting the tiled image GG. The position of the one image is, for example, the center position of the one image.

The first movement information DM1 is information for moving the position of the first image G1 on the projection surface SC. Specifically, the first movement information DM1 is one of information for optically moving the position of the first image G1 and information for electronically moving the position of the first image G1 and indicates, for example, a movement amount and a movement direction of the first image G1 on the projection surface SC. Hereinafter, optically moving the position of a projection image is sometimes referred to as "lens shift" and electronically moving the position of the projection image is sometimes referred to as "electronic shift". In the following explanation, an aspect of using the lens shift is mainly explained. However, the same applies to the electronic shift. The description "lens shift" can be replaced with "electronic shift" as appropriate.

The first movement information DM1 includes first direction information DM1a and first amount information DM1b.

The first direction information DM1a is information indicating upward, downward, left, and right that are based on a main body of the first projector 10-1 and indicates, in the case of the optical shift, a direction in which a lens of a projection optical system 15c of the first projector 10-1 is moved and indicates, in the case of the electronic shift, a direction in which an image is moved on a light modulator 15b of the first projector 10-1. Here, upward that is based on the main body of the first projector 10-1 is upward determined in the specifications of the first projector 10-1.

The first amount information DM1b is information indicating a movement amount of the position of the first image G1 on the projection surface SC. More specifically, the first amount information DM1b is, in the case of the optical shift, information indicating the number of steps of a motor provided in a mechanism that moves, for the lens shift, the lens of the projection optical system 15c of the first projector 10-1 and is, in the case of the electronic shift, information indicating the number of movement pixels of an image on the light modulator 15b of the first projector 10-1.

The second movement information DM2 is information for moving the position of the second image G2 on the projection surface SC. Specifically, the second movement information DM2 is information for controlling the operation of the second projector 10-2 and is one of information for optically moving the position of the second image G2 and information for electronically moving the position of the second image G2 and indicates, for example, a movement amount and a movement direction of the second image G2 on the projection surface SC. The second movement information DM2 may include, according to necessity, information indicating moving speed of the second image G2 on the projection surface SC besides the information indicating the movement amount and the movement direction of the second image G2 on the projection surface SC. For example, when speed at which the first projector 10-1 moves the position of the first image G1 is represented as first speed and maximum speed at which the second projector 10-2 can move the position of the second image G2 is represented as second speed, when the first speed is lower than the second speed, the second information D2 includes information indicating the first speed.

The second movement information DM2 includes second direction information DM2a and second amount information DM2b.

The second direction information DM2a is information indicating upward, downward, left, and right that are based on a main body of the second projector 10-2 and indicates, in the case of the optical shift, a direction in which a lens of the projection optical system 15c of the second projector 10-2 is moved and indicates, in the case of the electronic shift, a direction in which an image is moved on the light modulator 15b of the second projector 10-2. Here, upward that is based on the main body of the second projector 10-2 is upward determined in the specifications of the second projector 10-2.

The second amount information DM2b is information indicating a movement amount of the position of the second image G2 on the projection surface SC. More specifically, the second amount information DM2b is, in the case of the optical shift, information indicating the number of steps of the motor provided in the mechanism that moves, for the lens shift, the lens of the projection optical system 15c of the second projector 10-2 and is, in the case of the electronic shift, information indicating the number of movement pixels of an image on the light modulator 15b of the second projector 10-2.

The first correction information DC1 is information for performing, on the first image G1, geometric correction corresponding to the position of the first image G1. Specifically, the first correction information DC1 is, for example, information indicating a correction value in order to perform, on the first image G1, the geometric correction corresponding to the position of the first image G1.

The second correction information DC2 is information for performing, on the second image G2, geometric correction corresponding to the position of the second image G2. Specifically, the second correction information DC2 is, for example, information indicating a correction value in order to perform, on the second image G2, the geometric correction corresponding to the position of the second image G2.

The third correction information DC3 is information concerning correction of the superimposition region R of the first image G1 and the second image G2 on the projection surface SC at the time when the tiled image GG is enlarged or reduced. Specifically, the third correction information DC3 is, for example, information indicating values of a width, a shape, a blend curve, and the like after correction of a blend region R1 explained below at the time when the tiled image GG is enlarged or reduced. The third correction information DC3 is used according to necessity and may be omitted.

The processing device 12 is a processing device having a function of controlling the units of the first projector 10-1 and a function of processing various data. The processing device 12 includes at least one processor such as a central processing unit (CPU). The processing device 12 may include a single processor or may include a plurality of processors. Some or all of the functions of the processing device 12 may be implemented by hardware such as a digital signal processor (DSP), an application-specific integrated circuit (ASIC), a programmable logic device (PLD), or a field-programmable gate array (FPGA). The processing device 12 may be integrated with the image processing circuit 14.

The communication device 13 is a communication device capable of communicating with various types of equipment and acquires the video data IMG1 from the terminal device 30 and communicates with the second projector 10-2. For example, the communication device 13 is a wired communication device of a wired local area network (LAN), a universal serial bus (USB), a high definition multimedia interface (HDMI), or the like or a wireless communication device of a low power wide area (LPWA), a wireless LAN including Wi-Fi, Bluetooth, or the like. Each of "HDMI", "Wi-Fi", and "Bluetooth" is a registered trademark.

The image processing circuit 14 is a circuit that performs necessary processing on the video data IMG1 received from the communication device 13 and inputs the video data IMG1 to the optical device 15. The image processing circuit 14 includes, for example, a not-illustrated frame memory, loads the video data IMG1 in the frame memory, executes various kinds of processing such as resolution conversion processing, resize processing, and distortion correction processing on the video data IMG1 as appropriate, and inputs the video data IMG1 to the optical device 15. The image processing circuit 14 may execute, according to necessity, processing such as OSD (On Screen Display) processing of generating image information for menu display, operation guide, or the like and combining the image information into the video data IMG1. The image processing circuit 14 may correct the shape of the first image G1 based on the first correction information DC1 stored in the storage device 11 or may correct, based on the third correction information DC3 stored in the storage device 11, a portion of the first image G1 used for the superimposition region R.

The optical device 15 is a device that projects image light onto the projection surface SC. The optical device 15 includes a light source 15a, a light modulator 15b, a projection optical system 15c, an optical zoom mechanism 15d, and an optical shift mechanism 15e. The optical zoom mechanism 15d-1, which is the optical zoom mechanism 15d provided in the first projector 10-1, is an example of a "first optical zoom mechanism". The optical zoom mechanism 15d-2, which is the optical zoom mechanism 15d provided in the second projector 10-2, is an example of a "second optical zoom mechanism". An optical shift mechanism 15e-1, which is the optical shift mechanism 15e provided in the first projector 10-1, is an example of a "first optical shift mechanism". An optical shift mechanism 15e-2, which is the optical shift mechanism 15e provided in the second projector 10-2, is an example of a "second optical shift mechanism".

The light source 15a includes a light source such as a halogen lamp, a xenon lamp, an ultrahigh-pressure mercury lamp, a light-emitting diode (LED), or a laser light source and outputs red light, green light, and blue light.

The light modulator 15b draws an image based on the video data IMG1 supplied from the terminal device 30. The light modulator 15b includes three light modulation elements provided to correspond to red, green, and blue. The light modulation elements include, for example, transmissive liquid crystal panels, reflective liquid crystal panels, or digital mirror devices (DMDs) and modulate lights having colors corresponding thereto to generate image lights having the colors. The image lights having the colors generated by the light modulator 15b are combined by a color combining optical system to be full color image light.

The projection optical system 15c is an optical system including a projection lens and the like that form an image of the full color image light emitted from the light modulator 15b and projects the image onto the projection surface SC. The image drawn by the light modulator 15b, that is, a drawn image is projected onto the projection surface SC via the projection lens.

The optical zoom mechanism 15d is a mechanism that changes, in a direction extending along the optical axis of the projection optical system 15c, a relative positional relationship among a plurality of lenses provided in the projection optical system 15c. By changing the positional relationship, an optical zoom function is implemented. That is, the optical zoom mechanism 15d enlarges or reduces the first image G1 on the projection surface SC by changing, in the direction extending along the optical axis, the relative positional relationship among the plurality of lenses provided in the projection optical system 15c. Typically, the optical zoom mechanism 15d is implemented by a mechanism including a stepping motor for moving, in the direction extending along the optical axis, at least one of the plurality of lenses provided in the projection optical system 15c.

The optical shift mechanism 15e is a mechanism that changes, in a direction intersecting the optical axis, a relative positional relationship between the light modulator 15b and the projection optical system 15c. By changing the positional relationship, an optical lens shift function is implemented. That is, the optical shift mechanism 15e changes, in the direction intersecting the optical axis, the relative positional relationship between the light modulator 15b and the projection optical system 15c to thereby change the position of the first image G1 on the projection surface SC while keeping the position and the posture of the first projector 10-1 with respect to the projection surface SC fixed. Typically, the optical shift mechanism 15e is implemented by a mechanism including a stepping motor for moving the position of the projection lens provided in the projection optical system 15c.

In the optical device 15, a drawing position in the light modulator 15b can be changed. An electronic shift function may be implemented by changing the drawing position. That is, the optical device 15 may change the drawing position in the light modulator 15b to thereby change the position of the first image G1 on the projection surface SC while keeping the position and the posture of the first projector 10-1 with respect to the projection surface SC fixed.

The operation device 16 is a device that receives operation of a user. For example, the operation device 16 includes an operation panel and a remote controller light receiver, both of which are not illustrated in the figures. The operation panel is provided in an exterior housing of the first projector 10-1 and outputs a signal that is based on operation of the user. The remote controller light receiver receives an infrared signal output from a not-illustrated remote controller, decodes the infrared signal, and outputs a signal that is based on operation on the remote controller. The operation device 16 is provided according to necessity and a part of the operation device 16 may be omitted.

The imaging device 17 is a digital camera including an imaging element such as a charge coupled device (CCD) or a complementary metal oxide semiconductor (CMOS). The imaging element includes a plurality of pixels.

In the first projector 10-1 explained above, the processing device 12 executes the program PR1 stored in the storage device 11 to thereby function as a projection controller 12a, an imaging controller 12b, and a corrector 12c. Therefore, the processing device 12 includes the projection controller 12a, the imaging controller 12b, and the corrector 12c.

The projection controller 12a controls operations of the image processing circuit 14 and the optical device 15 of each of the first projector 10-1 and the second projector 10-2.

More specifically, the projection controller 12a causes the first projector 10-1 to project the first image G1 onto the projection surface SC and causes the second projector 10-2 to project the second image G2 onto the projection surface SC to thereby cause the first projector 10-1 and the second projector 10-2 to project the tiled image GG onto the projection surface SC.

The projection controller 12a acquires, via the communication device 13, the first information D1 from a device for remotely operating the first projector 10-1 or a device such as the terminal device 30 and controls the operation of the optical zoom mechanism 15d-1, which is the optical zoom mechanism 15d of the first projector 10-1, based on the first information D1. The projection controller 12a outputs the second information D2 toward the second projector 10-2 based on the first information D1. Accordingly, the operation of the optical zoom mechanism 15d-2, which is the optical zoom mechanism 15d of the second projector 10-2, is controlled.

Further, the projection controller 12a controls an operation of the optical shift mechanism 15e-1, which is the optical shift mechanism 15e of the first projector 10-1, based on the first movement information DM1. The projection controller 12a outputs the second movement information DM2 toward the second projector 10-2. Accordingly, an operation of the optical shift mechanism 15e-2, which is the optical shift mechanism 15e of the second projector 10-2, is controlled.

After installation of the first projector 10-1 and the second projector 10-2 is completed, in order to acquire the first shape information DS1 and the second shape information DS2 in advance in step S20 explained below, the projection controller 12a causes the first projector 10-1 to sequentially project the first image G1 onto each of the plurality of positions on the projection surface SC using the optical shift mechanism 15e-1 of the first projector 10-1 or causes the second projector 10-2 to sequentially project the second image G2 onto each of the plurality of positions on the projection surface SC using the optical shift mechanism 15e-2 of the second projector 10-2.

The present embodiment is based on the premise that the shapes of the first image G1 and the second image G2 on the projection surface SC are not distorted and maintain similar shapes when only the zoom function is executed. When the shapes of the first image G1 and the second image G2 on the projection surface SC are distorted even if only the zoom function is executed, the projection controller 12a may execute zooming of the first image G1 and the second image G2 at the positions when acquiring the first shape information DS1 and the second shape information DS2. Examples of a cause of the shapes of the first image G1 and the second image G2 on the projection surface SC being distorted even if only the zoom function is executed include the aberration of the projection optical system 15c and the distortion of the projection surface SC.

After the acquisition of the first shape information DS1 and the second shape information DS2, the projection controller 12a corrects, based on the first correction information DC1, the shape of the first image G1 on the projection surface SC using the correction function of the first projector 10-1 or corrects, based on the second correction information DC2, the shape of the second image G2 on the projection surface SC using the correction function of the second projector 10-2.

The imaging controller 12b controls an operation of the imaging device 17 of one or both of the first projector 10-1 and the second projector 10-2. More specifically, the imaging controller 12b causes the imaging device 17 to capture the first image G1 projected onto each of the plurality of positions on the projection surface SC or causes the imaging device 17 to capture the second image G2 projected onto each of the plurality of positions on the projection surface SC. When executing zooming of the first image G1 and the second image G2 at the positions in step S20 explained below, the first image G1 and the second image G2 at each of a plurality of control values indicating kinds of zooming different from one another may be captured.

The corrector 12c acquires the first shape information DS1 in advance based on a result of capturing the first image G1 projected onto each of the plurality of positions on the projection surface SC with the imaging device 17 or acquires the second shape information DS2 in advance based on a result of capturing the second image G2 projected onto each of the plurality of positions on the projection surface SC with the imaging device 17.

The corrector 12c acquires the third correction information DC3 in advance based on a result of capturing the first image G1 projected onto each of the plurality of positions on the projection surface SC with the imaging device 17.

Further, the corrector 12c generates the first movement information DM1 and the second movement information DM2 based on the first information D1 and the reference information DP.

The corrector 12c generates the first correction information DC1 based on the first shape information DS1, the first information D1, and the first movement information DM1 and generates the second correction information DC2 based on the second shape information DS2, the second information D2, and the second movement information DM2. In the present embodiment, besides the first shape information DS1, the first information D1, and the first movement information DM1, the third correction information DC3 is used to generate the first correction information DC1 with the corrector 12c. When the positions and the postures of the first projector 10-1 and the second projector 10-2 with respect to the projection surface SC are changed, the first correction information DC1 and the second correction information DC2 are regenerated under new conditions according to necessity.

### 1-3. Tiled image

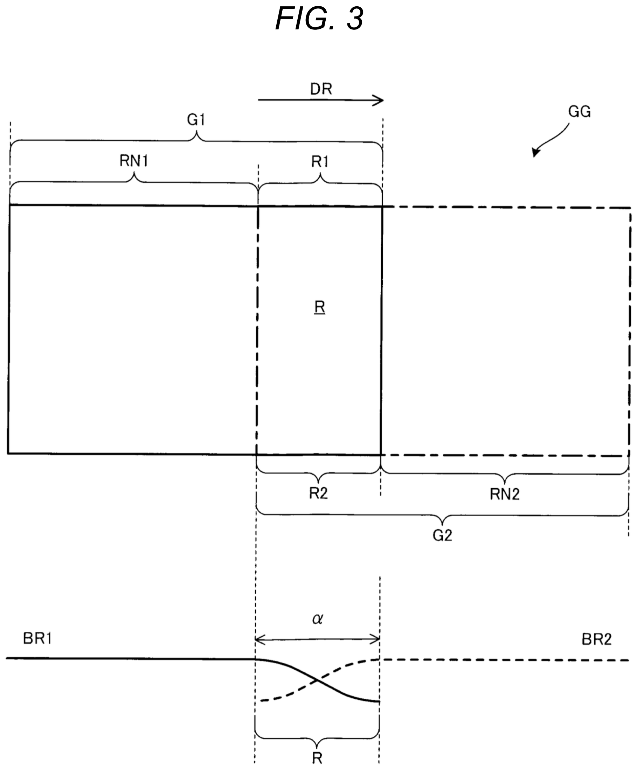

FIG. 3 is a diagram illustrating the tiled image GG. FIG. 3 illustrates an example of a relationship between brightness BR1 of the first image G1 and brightness BR2 of the second image G2 in the case in which the brightness of the tiled image GG is uniform.

The first image G1 at the time when the tiled image GG is projected onto the projection surface SC includes a non-superimposition region RN1 and a blend region R1. The non-superimposition region RN1 is a region not overlapping the second image G2. The blend region R1 is a region overlapping the second image G2. The blend region R1 is subjected to blend processing. The blend processing changes brightness in an arrangement direction DR of arrangement of the first image G1 and the second image G2 such that the brightness of the superimposition region R in the case in which the first image G1 and the second image G2 are projected to overlap each other in the superimposition region R coincides with the brightness of the non-superimposition region RN1.

The second image G2 at the time when the tiled image GG is projected onto the projection surface SC includes a non-superimposition region RN2 and a blend region R2. The non-superimposition region RN2 is a region not overlapping the first image G1. The blend region R2 is a region overlapping the first image G1. The blend region R2 is subjected to the blend processing.

In the blend region R1 of the first image G1, the brightness BR1 of the first image G1 changes from the brightness of the non-superimposition region RN1 to zero over a range α of the superimposition region R in the arrangement direction DR. In the blend region R1, the distribution of the brightness BR1 in the arrangement direction DR, that is, a blend curve only has to be set such that the brightness of the superimposition region R coincides with the brightness of the non-superimposition region RN1 and is not limited to the example illustrated in FIG. 3.

On the other hand, in the blend region R2 of the second image G2, the brightness BR2 of the second image G2 changes from the brightness of the non-superimposition region RN2 to zero over the range α of the superimposition region R in the direction opposite to the arrangement direction DR. In the blend region R2, the distribution of the brightness BR2 in the arrangement direction DR, that is, a blend curve only has to be set such that the brightness of the superimposition region R coincides with the brightness of the non-superimposition region RN2 and is not limited to the example illustrated in FIG. 3.

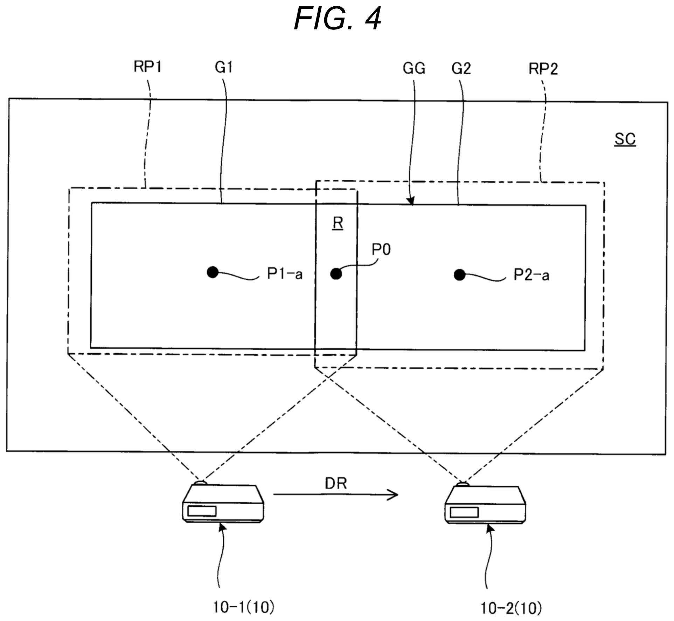

FIG. 4 is a diagram illustrating a relationship between the tiled image GG and projectable regions RP1 and RP2 of the projectors 10. The projectable region RP1 is a maximum region where projection can be performed by the first projector 10-1 and includes the first image G1. The projectable region RP2 is a maximum region where projection can be performed by the second projector 10-2 and includes the second image G2.

FIG. 4 illustrates a state in which the tiled image GG is displayed in a normal shape on the projection surface SC. In an example illustrated in FIG. 4, the shape of the tiled image GG on the projection surface SC is a rectangle. Here, each of the shape of the first image G1 and the shape of the second image G2 is a rectangle on the projection surface SC. The position of the projectable region RP1 is a position P1-a and the position of the projectable region RP2 is a position P2-a. The position P1-a is a position corresponding to the optical center of the projection optical system 15c-1 and is typically equivalent to the position of the first image G1. The position P2-a is a position corresponding to the optical center of the projection optical system 15c-2 and is typically equivalent to the position of the second image G2. The optical center of the projection optical system 15c fluctuates according to lens offset or lens shift.

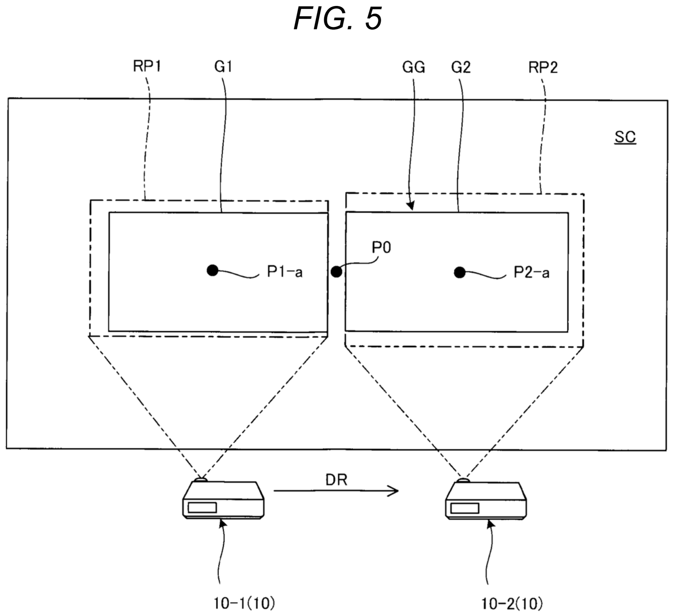

FIG. 5 is a diagram illustrating each of the first image G1 and the second image G2 simply reduced in size. FIG. 5 illustrates the first image G1 and the second image G2 in the case in which the first image G1 is reduced by the zoom function of the first projector 10-1 and the second image G2 is reduced at the same reduction ratio as a reduction ratio of the first image G1 by the zoom function of the second projector 10-2 without correcting the positions and the shapes of the first image G1 and the second image G2. Here, the first image G1 and the second image G2 are zoomed based on the first information D1. In the present embodiment, the second image G2 is zoomed based on the second information D2 that is based on the first information D1.

As illustrated in FIG. 5, when the first image G1 is simply reduced by the zoom function of the first projector 10-1, the first image G1 contracts toward the position P1-a while the position of the first image G1 is maintained at the position P1-a. Similarly, when the second image G2 is simply reduced by the zoom function of the second projector 10-2, the second image G2 contracts toward the position P2-a while the position of the second image G2 is maintained at the position P2-a.

As explained above, when the zoom amount of each of the first image G1 and the second image G2 changes while the positional relationship between the first image G1 and the second image G2 is fixed, a ratio of the width of the superimposition region R to the width of the first image G1 and the second image G2 fluctuates. Therefore, the tiled image GG cannot be maintained.

As in the illustrated example, when each of the first image G1 and the second image G2 is reduced while the positional relationship between the first image G1 and the second image G2 is fixed, the ratio of the width of the superimposition region R to the width of the first image G1 and the second image G2 decreases. For this reason, the tiled image GG cannot be maintained. FIG. 5 exemplifies a state in which the width of the superimposition region R disappears and the tiled image GG cannot be maintained. Although not illustrated, when each of the first image G1 and the second image G2 is enlarged while the positional relationship between the first image G1 and the second image G2 is fixed, the ratio of the width of the superimposition region R to the width of the first image G1 and the second image G2 increases. In this case as well, the tiled image GG cannot be maintained.

Thus, in the system 100, according to a change in zoom amounts of the first image G1 and the second image G2 by the zoom function, the position of one or both of the first image G1 and the second image G2 is moved by the lens shift function such that the ratio of the width of the superimposition region R to the width of the first image G1 and the second image G2 is maintained. In the present embodiment, the position of the first image G1 is moved based on the first movement information DM1 and the position of the second image G2 is moved based on the second movement information DM2.

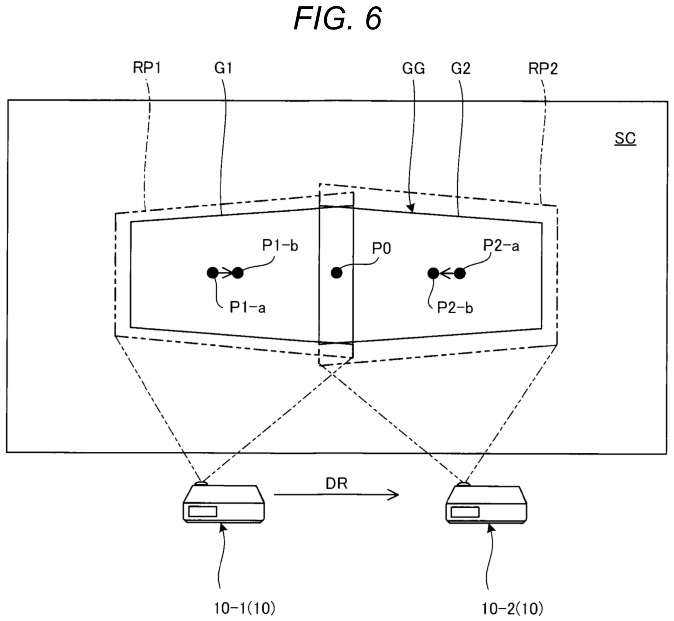

FIG. 6 is a diagram illustrating the tiled image GG after lens shift corresponding to a zoom amount. FIG. 6 exemplifies the tiled image GG after zooming in the case in which the position of the projectable region RP1 is changed from the position P1-a to the position P1-b by the lens shift function of the first projector 10-1 and the position of the projectable region RP2 is changed from the position P2-a to the position P2-b by the lens shift function of the second projector 10-2 without correcting the shapes of the first image G1 and the second image G2.

In an example illustrated in FIG. 6, the position of the first image G1 on the projection surface SC moves from the position P1-a to the position P1-b according to a change in the position of the projectable region RP1. Similarly, the position of the second image G2 on the projection surface SC moves from the position P2-a to the position P2-b according to a change in the position of the projectable region RP2.

Each of a movement direction from the position P1-a to the position P1-b and a movement direction from the position P2-a to the position P2-b is a direction of approaching the reference position P0. The reference position P0 is a position in the tiled image GG projected onto the projection surface SC in the normal shape. In the illustrated example, the reference position P0 is the center position in the tiled image GG projected onto the projection surface SC in the normal shape. Therefore, in the illustrated example, the movement direction from the position P1-a to the position P1-b and the movement direction from the position P2-a to the position P2-b are opposite to each other.

Each of the movement amount from the position P1-a to the position P1-b and the movement amount from the position P2-a to the position P2-b is an amount by which the ratio of the width of the superimposition region R to the width of the first image G1 and the second image G2 is maintained. The movement amount changes according to a zoom amount of each of the first image G1 and the second image G2.

Here, only by changing the positions of the projectable regions RP1 and RP2, as illustrated in FIG. 6, the shapes of the first image G1 and the second image G2 on the projection surface SC change to shapes different from normal shapes. As a result, the tiled image GG on the projection surface SC also changes to a shape different from the normal shape.

Examples of a factor of the shape of the tiled image GG on the projection surface SC being distorted according to the execution of the lens shift function as explained above include a difference in a type of the projection optical system 15c and a difference in a projection angle or a projection distance between the first projector 10-1 and the second projector 10-2.

Thus, in the system 100, the shapes of the first image G1 and the second image G2 are corrected such that the shapes of the first image G1 and the second image G2 are maintained according to a change in the positions of the first image G1 and the second image G2. Here, the shape of the first image G1 is corrected based on the first correction information DC1. The shape of the second image G2 is corrected based on the second correction information DC2.

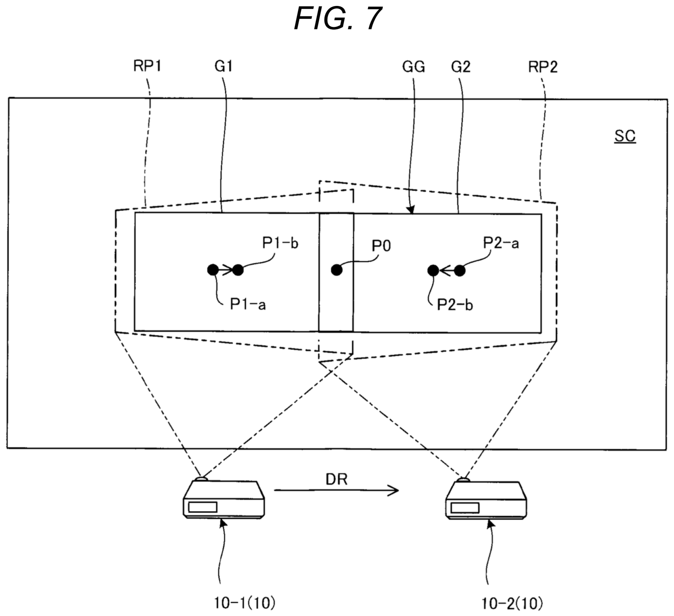

FIG. 7 is a diagram illustrating the tiled image GG after zooming of the image projection method according to the embodiment. In the system 100, even when the position of the projectable region RP1 is changed from the position P1-a to the position P1-b and the position of the projectable region RP2 is changed from the position P2-a to the position P2-b according to the zooming of the first image G1 and the second image G2, the shape of the tiled image GG on the projection surface SC is maintained in the normal shape as illustrated in FIG. 7.

Here, the first projector 10-1 corrects the shape of the first image G1 to the normal shape in the projectable region RP1 with the correction function. Similarly, the second projector 10-2 corrects the shape of the second image G2 to the normal shape in the projectable region RP2 with the correction function. The correcting the shape to the normal shape means bringing the shape of an image close to a rectangle, typically, an oblong by correcting geometric distortion.

### 1-4. Image projection method

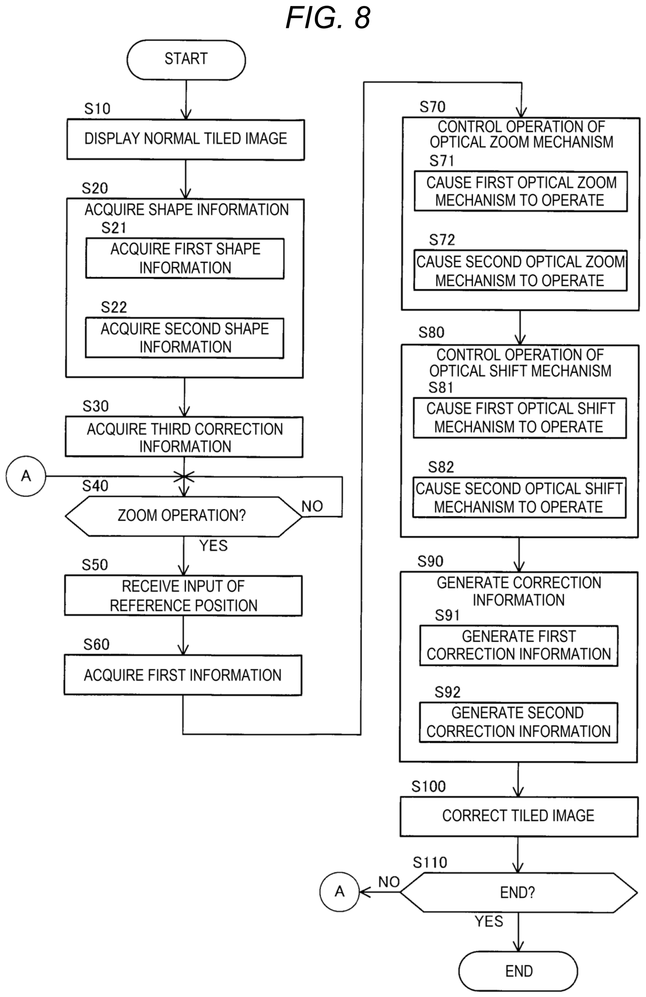

FIG. 8 is a flowchart of the image projection method according to the embodiment. The image projection method includes steps S10 to S110. These steps are performed by the processing device 12 of the first projector 10-1 executing the program PR1. That is, the program PR1 causes the processing device 12 of the first projector 10-1 to execute steps S10 to S110. The processing device 12 of the first projector 10-1 executes steps S10 to S110.

First, in step S10, the processing device 12 functioning as the projection controller 12a of the first projector 10-1 causes the first projector 10-1 to project the normal tiled image GG onto the projection surface SC. Specifically, after fixing a relationship of the positions and the postures of the first projector 10-1 and the second projector 10-2 with respect to the projection surface SC, in step S10, the processing device 12 functioning as the projection controller 12a of the first projector 10-1 causes the first projector 10-1 to project the first image G1 having the normal shape onto the projection surface SC and causes the second projector 10-2 to project the second image G2 having the normal shape onto the projection surface SC as illustrated in FIG. 4 referred to above. Accordingly, the tiled image GG having the normal shape is projected onto the projection surface SC.

A method of causing the first projector 10-1 to project the tiled image GG having the normal shape onto the projection surface SC in step S10 is not particularly limited. Publicly-known various geometric correction methods can be used. For example, based on a result of capturing the first image G1 and the second image G2 projected onto the projection surface SC with the imaging device 17, the shapes of the images are measured by a publicly-known image recognition technology and, based on a result of the measurement, the shapes of the first image G1 and the second image G2 are corrected by a publicly-known geometric correction method such that the tiled image GG has a desired shape. In step S10, the width of the superimposition region R is determined and the blend processing is performed by a publicly-known technique such that the tiled image GG has desired image quality.

After step S10, in step S20, the processing device 12 of the first projector 10-1 acquires the first shape information DS1 and the second shape information DS2 as shape information. Specifically, step S20 includes step S21 and step S22.

In step S21, the processing device 12 functioning as the imaging controller 12b and the corrector 12c of the first projector 10-1 acquires the first shape information DS1 in advance. In step S22, the processing device 12 functioning as the imaging controller 12b and the corrector 12c of the first projector 10-1 acquires the second shape information DS2 in advance. The execution order of step S21 and step S22 is not particularly limited and is optional. "In advance" in steps S20 and S30 means a time point before zooming of the tiled image GG is executed.

After step S20, in step S30, the processing device 12 of the first projector 10-1 acquires the third correction information DC3 in advance. In step S30, the processing device 12 generates third correction information DC3 using, as appropriate, a result of capturing an image using the imaging device 17 when generating the first shape information DS1 and the second shape information DS2 in step S20. Note that step S30 may be executed before step S20 or may be executed simultaneously with step S20.

After step S30, in step S40, the processing device 12 functioning as the corrector 12c of the first projector 10-1 determines the presence or absence of zoom operation. The determination is made based on, for example, information such as control information in the first projector 10-1 triggered by a control signal from a device for remotely operating the first projector 10-1 or a device such as the terminal device 30. Step S40 is repeatedly performed until zoom operation is performed (step S40: NO).

When the zoom operation is performed (step S40: YES), in step S50, the processing device 12 functioning as the corrector 12c of the first projector 10-1 receives, as the reference information DP, input indicating the reference position P0 via a user interface image GU. Accordingly, the reference position P0 of the tiled image GG can be set according to a desire of the user. The reference information DP received in step S50 is stored in the storage device 11. The input of the reference position P0 is received using the user interface image GU explained below. This display example is explained below.

After step S50, in step S60, the processing device 12 functioning as the projection controller 12a of the first projector 10-1 acquires the first information D1 when projecting the tiled image GG onto the projection surface SC. Here, the first information D1 is acquired by the processing device 12 of the first projector 10-1 based on, for example, information such as control information in the first projector 10-1 triggered by a control signal from a device for remotely operating the first projector 10-1 or a device such as the terminal device 30.

After step S60, in step S70, the processing device 12 functioning as the projection controller 12a of the first projector 10-1 controls the operations of the optical zoom mechanisms 15d of the first projector 10-1 and the second projector 10-2. Step S70 includes step S71 and step S72. Execution order of step S71 and step S72 is optional and may be simultaneous.

In step S71, the processing device 12 functioning as the projection controller 12a of the first projector 10-1 causes the optical zoom mechanism 15d-1 to operate. More specifically, in step S71, the processing device 12 functioning as the projection controller 12a of the first projector 10-1 controls the operation of the optical zoom mechanism 15d-1 to a zoom amount corresponding to the first information D1.

In step S72, the processing device 12 functioning as the projection controller 12a of the first projector 10-1 causes the optical zoom mechanism 15d-2 to operate. More specifically, in step S72, the processing device 12 functioning as the projection controller 12a of the first projector 10-1 controls the operation of the optical zoom mechanism 15d-2 to the zoom amount corresponding to the first information D1. In the present embodiment, in step S72, the processing device 12 functioning as the projection controller 12a of the first projector 10-1 generates the second information D2 based on the first information D1 and outputs the generated second information D2 toward the second projector 10-2 to thereby control the operation of the optical zoom mechanism 15d-2 to the zoom amount corresponding to the first information D1.

After step S70, in step S80, the processing device 12 functioning as the projection controller 12a of the first projector 10-1 moves the position of one or both of the first image G1 and the second image G2. When the operations of the optical zoom mechanisms 15d-1 and 15d-2 are controlled in step S70, the distance between the first image G1 and the second image G2 is about to change. However, in step S80, one or both of the first image G1 and the second image G2 move in a direction for offsetting this change. The distance between the first image G1 and the second image G2 is the distance between the end in the arrangement direction DR of the first image G1 and the end opposite to the arrangement direction DR of the second image G2. In the present embodiment, the distance between the first image G1 and the second image G2 is the distance between the right end of the first image G1 and the left end of the second image G2. The "direction for offsetting the change" is, when the width of the superimposition region R is about to decrease according to the reduction of the first image G1 and the second image G2 as explained above, a direction in which the center of the first image G1 and the center of the second image G2 are moved away from each other and is, when the width of the superimposition region R is about to increase according to the enlargement of the first image G1 and the second image G2, a direction in which the center of the first image G1 and the center of the second image G2 are brought close to each other.

More specifically, in step S80, the processing device 12 functioning as the projection controller 12a of the first projector 10-1 controls the operations of the optical shift mechanisms 15e of the first projector 10-1 and the second projector 10-2 based on the first information D1 and the reference information DP. Step S80 includes step S81 and step S82. Note that execution order of step S81 and step S82 is optional and may be simultaneous.

In step S81, the processing device 12 functioning as the projection controller 12a of the first projector 10-1 causes the first optical shift mechanism 15e-1 to operate. More specifically, in step S81, the processing device 12 functioning as the projection controller 12a of the first projector 10-1 controls the operation of the first optical shift mechanism 15e-1 based on the first information D1 and the reference information DP. In the present embodiment, in step S81, the processing device 12 functioning as the projection controller 12a of the first projector 10-1 generates the first movement information DM1 based on the first information D1 and the reference information DP and controls the operation of the first optical shift mechanism 15e-1 based on the generated first movement information DM1. Accordingly, the first image G1 moves. This movement is preferably performed in synchronization with the zooming of the first image G1 in step S71 to maintain the superimposition region R.

In step S82, the processing device 12 functioning as the projection controller 12a of the first projector 10-1 causes the second optical shift mechanism 15e-2 to operate. More specifically, in step S82, the processing device 12 functioning as the projection controller 12a of the first projector 10-1 controls the operation of the second optical shift mechanism 15e-2 based on the first information D1 and the reference information DP. In the present embodiment, in step S82, the processing device 12 functioning as the projection controller 12a of the first projector 10-1 generates the second movement information DM2 based on the first information D1 and the reference information DP and outputs the generated second movement information DM2 toward the second projector 10-2 to thereby control the operation of the second optical shift mechanism 15e-2 based on the second movement information DM2. Accordingly, the second image G2 moves. This movement is preferably performed in synchronization with the zooming of the second image G2 in step S72 to maintain the superimposition region R.

As explained above, in step S80, even when the zoom amounts of the first optical zoom mechanism 15d-1 and the second optical zoom mechanism 15d-2 are changed, the position of one or both of the first image G1 and the second image G2 is moved in a direction for offsetting a change in the distance between the first image G1 and the second image G2 due to the change. Accordingly, the tiled image GG can be maintained. For this reason, the tiled image GG can be zoomed.

The moving one or both of the first image G1 and the second image G2 in step S80 includes moving the position of one or both of the first image G1 and the second image G2 toward the reference position P0 in the tiled image GG. Accordingly, it is possible to zoom the tiled image GG while maintaining the reference position P0 of the tiled image GG.

After step S80, in step S90, the processing device 12 functioning as the corrector 12c of the first projector 10-1 generates the first correction information DC1 and the second correction information DC2 as correction information. Step S90 includes step S91 and step S92. Execution order of step S91 and step S92 is not particularly limited and is optional.

In step S91, the processing device 12 functioning as the corrector 12c of the first projector 10-1 generates the first correction information DC1 based on the position after the movement of the first image G1 by the movement of the first image G1 in step S80.

More specifically, in step S91, the processing device 12 functioning as the corrector 12c of the first projector 10-1 generates the first correction information DC1 based on the first shape information DS1, the first information D1, and the first movement information DM1. As explained above, the generating the first correction information DC1 in step S91 includes generating the first correction information DC1 based on the control value of the first optical zoom mechanism 15d-1 and the first shape information DS1. The generating the first correction information DC1 in step S91 includes generating the first correction information DC1 based on the position of the first image G1 and the first shape information DS1. In the present embodiment, in step S91, the processing device 12 of the first projector 10-1 generates the first correction information DC1 using the third correction information DC3 besides the first shape information DS1, the first information D1, and the first movement information DM1.

Since the first correction information DC1 is based on the control value of the first optical zoom mechanism 15d-1 and the first shape information DS1 as explained above, the shape of the first image G1 on the projection surface SC can be maintained even when the first image G1 is zoomed. Since the first correction information DC1 is based on the position of the first image G1 and the first shape information DS1, the shape of the first image G1 on the projection surface SC can be maintained even if the position of the first image G1 on the projection surface SC moves.

In step S92, the processing device 12 functioning as the corrector 12c of the first projector 10-1 generates the second correction information DC2 based on the position after the movement of the second image G2 by the movement of the second image G2 in step S80.

More specifically, in step S92, the processing device 12 of the first projector 10-1 generates the second correction information DC2 based on the second shape information DS2, the second information D2, and the second movement information DM2. As explained above, the generating the second correction information DC2 in step S92 includes generating the second correction information DC2 based on the control value of the second optical zoom mechanism 15d-2 and the second shape information DS2. The generating the second correction information DC2 in step S92 includes generating the second correction information DC2 based on the position of the second image G2 and the second shape information DS2.

Since the second correction information DC2 is based on the control value of the second optical zoom mechanism 15d-2 and the second shape information DS2 as explained above, the shape of the second image G2 on the projection surface SC can be maintained even if the second image G2 is zoomed. Since the second correction information DC2 is based on the position of the second image G2 and the second shape information DS2, the shape of the second image G2 on the projection surface SC can be maintained even if the position of the second image G2 on the projection surface SC moves.

After step S90, in step S100, the processing device 12 functioning as the projection controller 12a of the first projector 10-1 corrects the tiled image GG based on the first correction information DC1 and the second correction information DC2. Specifically, in step S100, the processing device 12 of the first projector 10-1 controls the operations of the image processing circuit 14 and the optical device 15 of the first projector 10-1 based on the first correction information DC1 and controls the operations of the image processing circuit 14 and the optical device 15 of the second projector 10-2 based on the second correction information DC2. As explained above, the shape of the first image G1 on the projection surface SC can be maintained by using the first correction information DC1 and the shape of the second image G2 on the projection surface SC can be maintained by using the second correction information DC2. As a result, the shape of the first image G1 on the projection surface SC is corrected to the normal shape and the shape of the second image G2 on the projection surface SC is corrected to the normal shape. As a result, the shape of the tiled image GG is corrected to the normal shape.

Here, correction timing of the first image G1 and correction timing of the second image G2 may be the same or may be different. However, it is preferable that the first image G1 is corrected in synchronization with the first image G1 being zoomed in step S71 and the first image G1 being moved in step S81 and the second image G2 is corrected in synchronization with the second image G2 being zoomed in step S72 and the second image G2 being moved in step S82. Accordingly, it is possible to display the tiled image GG while reducing a sense of discomfort.

After step S100, in step S110, the processing device 12 determines whether to end the processing. This determination is made based on, for example, the presence or absence of an end instruction from the user. When determining not to end the processing (step S110: NO), the processing device 12 returns to step S40. Accordingly, steps S40 to S110 explained above are repeated. On the other hand, when determining to end the processing (step S110: YES), the processing device 12 ends the processing.

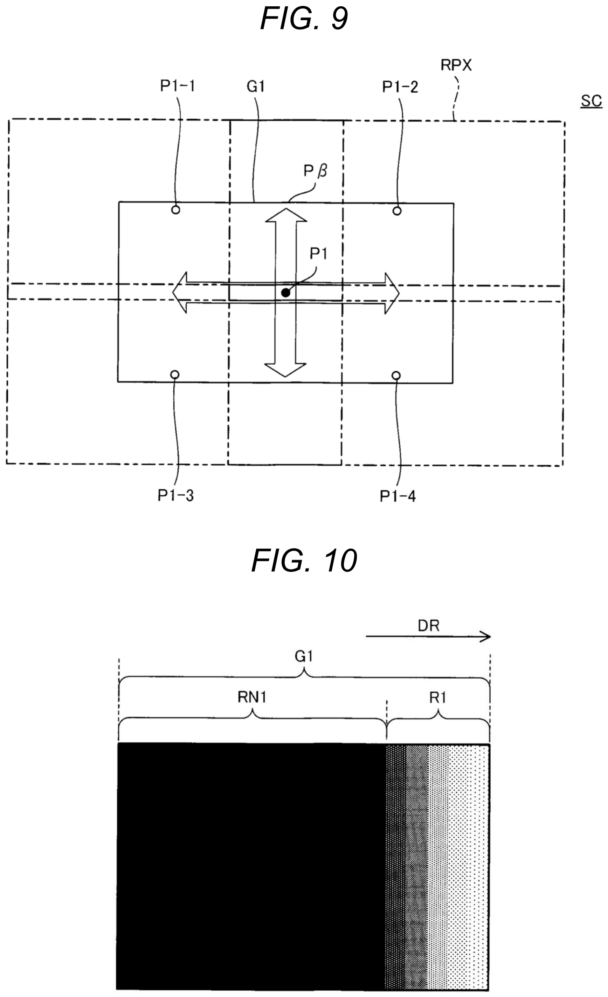

FIG. 9 is a diagram illustrating the acquisition of the first shape information DS1 in step S21. Hereinafter, the acquisition of the first shape information DS1 is representatively explained. The second shape information DS2 is acquired in step S22 in the same manner as the first shape information DS1 being acquired in step S21 except that the projector 10 set as a target is different.

In step S21, as illustrated in FIG. 9, the processing device 12 of the first projector 10-1 moves the position of the first image G1 on the projection surface SC with the lens shift function. At this time, the processing device 12 of the first projector 10-1 captures the first image G1 at positions using the imaging device 17 and measures the shapes of the first image G1 at the positions using a result of the imaging. At this time, moving speed of the first image G1 on the projection surface SC may be measured. Information indicating a result of the measurement may be stored in the storage device 11 and used to determine whether to include information indicating the moving speed of the first image G1 in the second movement information DM2 in step S70.

The first image G1 in step S21 is not particularly limited and may be the same as or different from the first image G1 at the time of the projection of the tiled image GG but is preferably an image illustrated in FIG. 10 explained below from the viewpoint of improving the detection accuracy of a shape in a captured image by the imaging device 17. A size relationship between the first image G1 and the projectable region RP1 in step S21 is not particularly limited but is preferably the same as a size relationship between the first image G1 and the projectable region RP1 at the time of the projection of the tiled image GG. From the viewpoint of improving the detection accuracy of the shape in the captured image by the imaging device 17, it is preferable that the second image G2 is not projected onto the projection surface SC in step S21 or the first image G1 and the second image G2 do not overlap on the projection surface SC.

In step S21, a movement range of a position P1, which is the center position of the first image G1 on the projection surface SC, is within a region surrounded by a quadrangle having four points P1-1, P1-2, P1-3, and P1-4 as corners. A point P1-1 is a point at a position on the projection surface SC and is a point at the uppermost and leftmost position that the position P1 can reach with the lens shift function. A point P1-2 is a point at a position on the projection surface SC and is a point at the uppermost and rightmost position that the position P1 can reach with the lens shift function. A point P1-3 is a point at a position on the projection surface SC and is a point at the lowermost and leftmost position that the position P1 can reach with the lens shift function. A point P1-4 is a point at a position on the projection surface SC and is a point at the lowermost and rightmost position that the position P1 can reach with the lens shift function. In FIG. 9, the external shape of a region RPX that the first image G1 can reach with the lens shift function is indicated by an alternate long and two short dashes line.

In step S21, with the lens shift function, the position P1 of the first image G1 sequentially moves, in appropriate order, to a plurality of positions in the region surrounded by the points P1-1, P1-2, P1-3, and P1-4. The plurality of positions are, for example, positions for each predetermined number of steps of the motor provided in the optical shift mechanism 15e. The plurality of positions only has to be a plurality of positions dispersed within a necessary range of the region and may be dispersed in a partial region of the region or may be dispersed in the entire region. The plurality of positions may be arranged at equal intervals or at least some of the positions may not be arranged at equal intervals.

When the position of the first image G1 on the projection surface SC is changed by the lens shift function as explained above, the shape of the first image G1 on the projection surface SC changes. The first image G1 at the positions projected onto the projection surface SC is captured by the imaging device 17. Then, the contour of the first image G1 in the captured image is detected by the publicly-known image recognition technology. Information indicating coordinate values of four corners and midpoints of four sides of the detected contour is stored in the storage device 11 as the first shape information DS1 indicating the shape of the first image G1 on the projection surface SC. Information indicating the shape of the first image G1 in the first shape information DS1 may be information for each position of the first image G1 moving on the projection surface SC or for each imaging by the imaging device 17 but may include, according to necessity, information obtained by interpolating, with linear interpolation or the like, the shape of the first image G1 at a position where imaging is not performed.

As explained above, in step S21, the information indicating the relationship between the position and the shape of the first image G1 by the lens shift function is obtained as the first shape information DS1. In step S91, for example, after the position of the first image G1 on the projection surface SC is obtained based on the first information D1, the current shape of the first image G1 on the projection surface SC is obtained based on the obtained position and the relationship indicated by the first shape information DS1 and a correction value for geometrically correcting the shape of the first image G1 to offset the obtained shape is obtained. At that time, a correction value concerning the blend region R1 is also obtained using the third correction information DC3. Information indicating these correction values obtained as explained above is stored in the storage device 11 as the first correction information DC1.

Similarly, in step S22, information indicating the relationship between the position and the shape of the second image G2 by the lens shift function is obtained as the second shape information DS2. In step S92, for example, after the position of the second image G2 on the projection surface SC is obtained based on the second information D2, the current shape of the second image G2 on the projection surface SC is obtained based on the obtained position and the relationship indicated by the second shape information DS2 and a correction value for geometrically correcting the shape of the second image G2 to offset the obtained shape is obtained. Information indicating the correction values obtained as explained above is stored in the storage device 11 as the second correction information DC2.

FIG. 10 is a diagram illustrating acquisition of the third correction information DC3. In the present embodiment, in step S30, the processing device 12 generates the third correction information DC3 using the imaging result of the imaging device 17 in step S20.

In the first image G1 used in step S21 explained above, as illustrated in FIG. 10, whereas the brightness of the non-superimposition region RN1 is uniform, the brightness of the blend region R1 increases or decreases further away from the non-superimposition region RN1.

In step S30, the contours of the non-superimposition region RN1 and the blend region R1 in the captured image obtained by capturing the first image G1 with the imaging device 17 in step S21 are detected by the publicly-known image recognition technology using the captured image. In step S30, values of the width, the shape, the blend curve, and the like of the blend region R1 are obtained based on a result of detecting the non-superimposition region RN1 and the blend region R1 as explained above. Information indicating the obtained value is stored in the storage device 11 as the third correction information DC3.

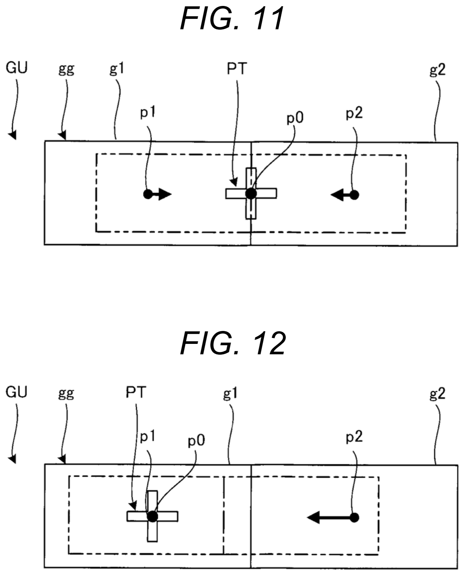

FIG. 11 is a diagram illustrating input of the reference position P0. FIG. 11 illustrates an example of the user interface image GU used to input the reference position P0 in step S50.

The user interface image GU is a graphical user interface (GUI) image for inputting the reference position P0. The user interface image GU may be displayed by projection on the projection surface SC by one or both of the first projector 10-1 and the second projector 10-2 or may be displayed by a display device provided in a device such as the terminal device 30 communicably coupled to the first projector 10-1. When both of the first projector 10-1 and the second projector 10-2 display the user interface image GU, at least a part of the tiled image GG projected onto the projection surface SC may be used for the user interface image GU. For example, images g1 and g2 explained below may be the first image G1 and the second image G2.

In the example illustrated in FIG. 11, the user interface image GU includes an image gg and a pointer PT. The image gg is an image imitating the tiled image GG and corresponds to the tiled image GG. The image gg includes an image g1 corresponding to the first image G1 and an image g2 corresponding to the second image G2. The images g1 and g2 are joined to each other such that the image gg imitates the tiled image GG. The pointer PT can be moved to any position in the image gg by operation of the user via a device such as the operation device 16. The position p0 of the pointer PT corresponds to the reference position P0. In step S50, the user performs operation of determining the position p0 of the pointer PT via the device such as the operation device 16, whereby a position obtained by converting the position p0 of the pointer PT in the image gg into a position in the tiled image GG is determined as the reference position P0.

FIG. 11 illustrates a state in which the position p0 is located at the center of the image gg. In FIG. 11, the tiled image GG in the case of being reduced is indicated by an alternate long and two short dashes line and a movement direction and a movement amount of each of a position p1 of the image g1 and a position p2 of the image g2 in the case of reducing the tiled image GG are indicated by arrows. As indicated by the alternate long and two short dashes line in FIG. 11, when the tiled image GG is reduced, each of the images g1 and g2 is reduced and each of the positions p1 and p2 is moved in a direction approaching the position p0 to maintain the shape of the image gg. On the other hand, although not illustrated, when the tiled image GG is enlarged, each of the images g1 and g2 is enlarged and each of the positions p1 and p2 is moved in a direction away from the position p0 to maintain the shape of the image gg.

FIG. 12 is a diagram illustrating another example of the input of the reference position P0. FIG. 12 illustrates another example of the user interface image GU used to input the reference position P0 in step S50.

The user interface image GU illustrated in FIG. 12 is the same as the user interface image GU illustrated in FIG. 11 except that the pointer PT selects one of the images g1 and g2. Here, the center of the image with which the pointer PT overlaps of the images g1 and g2 is the position p0. A position other than the center of the image on which the pointer PT overlaps of the images g1 and g2 may be the position p0.

FIG. 12 illustrates a state in which the pointer PT overlaps the image g1. In FIG. 12, the tiled image GG in the case of being reduced is indicated by an alternate long and two short dashes line and a movement direction and a movement amount of the position p2 of the image g2 in the case of reducing the tiled image GG are indicated by arrows. As indicated by the alternate long and two short dashes line in FIG. 12, when the tiled image GG is reduced, each of the images g1 and g2 is reduced and the position p2 moves in a direction approaching the position p0 to maintain the shape of the image gg. On the other hand, although not illustrated, when the tiled image GG is enlarged, each of the images g1 and g2 is enlarged and the position p2 is moved in a direction away from the position p0 to maintain the shape of the image gg. In the example illustrated in FIG. 12, since the pointer PT overlaps the image g1 and the center of the image g1 is the position p0, the position p1 does not change even if the tiled image GG is reduced or enlarged.

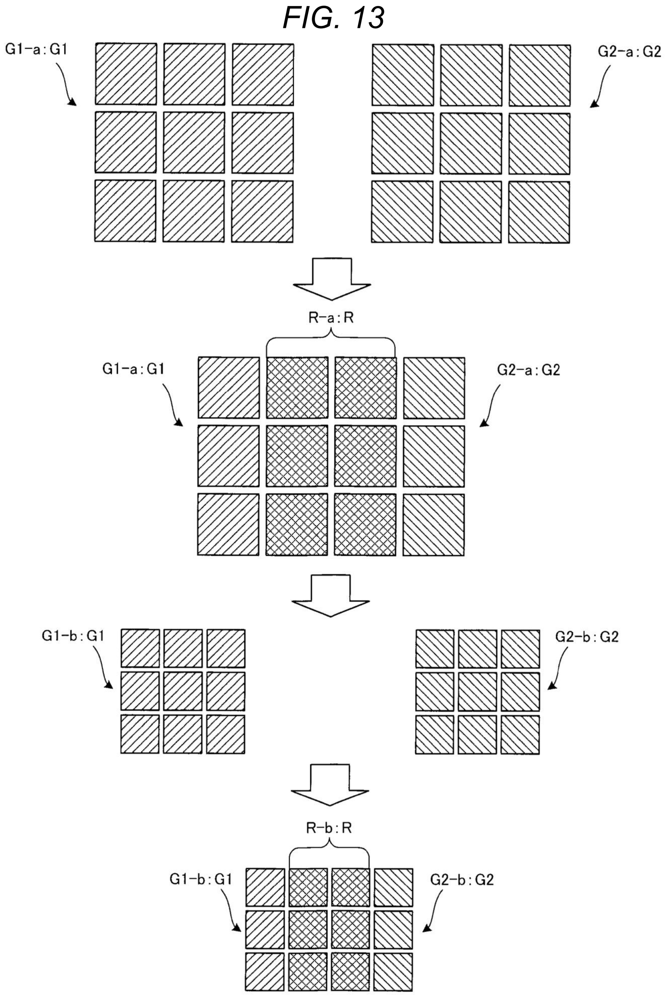

FIG. 13 is a diagram illustrating a relationship between lens shift corresponding to a change in a zoom amount and the superimposition region R. A first image G1-a and a second image G2-a are illustrated in first and second rows in FIG. 13 and a first image G1-b and a second image G2-b are illustrated in third and fourth rows in FIG. 13. The first image G1-a is the first image G1 before step S71 and the first image G1-b is the first image G1 after step S91. The second image G2-a is the second image G2 before step S72 and the second image G2-b is the second image G2 after step S92. For convenience of explanation, in the first row in FIG. 13, the first image G1-a and the second image G2-a are illustrated in a state in which the superimposition region R is not set and, in the second row in FIG. 13, the first image G1-a and the second image G2-a are illustrated in a state in which the superimposition region R is set. For convenience of explanation, in the third row in FIG. 13, the first image G1-b and the second image G2-b are illustrated in a state in which the superimposition region R is not set and, in the fourth row in FIG. 13, the first image G1-b and the second image G2-b are illustrated in a state in which the superimposition region R is set. In FIG. 13, the first image G1-b is an image obtained by reducing the first image G1-a and the second image G2-b is an image obtained by reducing the second image G2-a. In FIG. 13, for convenience of explanation, nine pixels of each image are schematically illustrated.

As illustrated in FIG. 13, the number of pixels in the width direction of a superimposition region R-b, which is the superimposition region R where the first image G1-b and the second image G2-b overlap, is equal to the number of pixels in the width direction of a superimposition region R-a, which is the superimposition region R where the first image G1-a and the second image G2-a overlap. Accordingly, it is possible to zoom the tiled image GG while maintaining a ratio of the width of the superimposition region R to the width of the first image G1 and the second image G2 constant. In FIG. 13, for convenience of explanation, the number of pixels in the width direction of the superimposition region R is two. However, in practice, the number of pixels in the width direction of the superimposition region R is approximately several to approximately a half or less of the number of pixels in the width direction of the first image G1 or the second image G2 as illustrated in FIG. 3.

As explained above, the system 100 can zoom the tiled image GG.

### 2. Modifications

The modes exemplified above can be variously modified. Specific aspects of modifications applicable to the modes explained above are exemplified below. Two or more aspects optionally selected from the following exemplifications can be combined as appropriate to an extent that no contradiction occurs.

### 2-1. Modification 1

In the embodiment explained above, the aspect in which the tiled image GG includes the two images of the first image G1 and the second image G2 is exemplified. However, the present disclosure is not limited to this aspect and the tiled image GG may include three or more images.

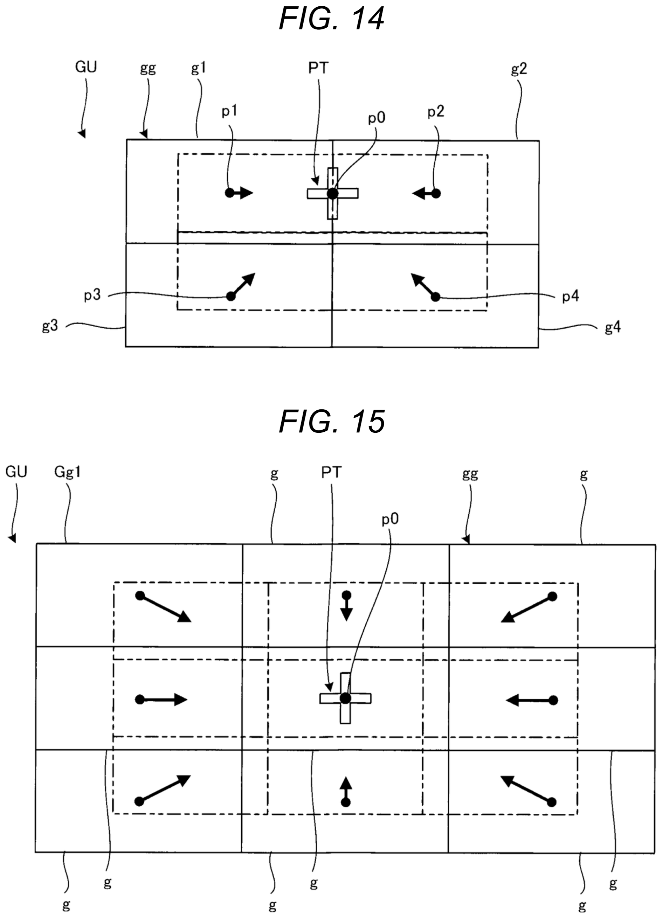

FIG. 14 is a diagram illustrating input of the reference position P0 in the case in which the tiled image GG includes four images. The user interface image GU illustrated in FIG. 14 is the same as the user interface image GU illustrated in FIG. 11 except that the user interface image GU includes four images g according to the number of images constituting the tiled image GG.

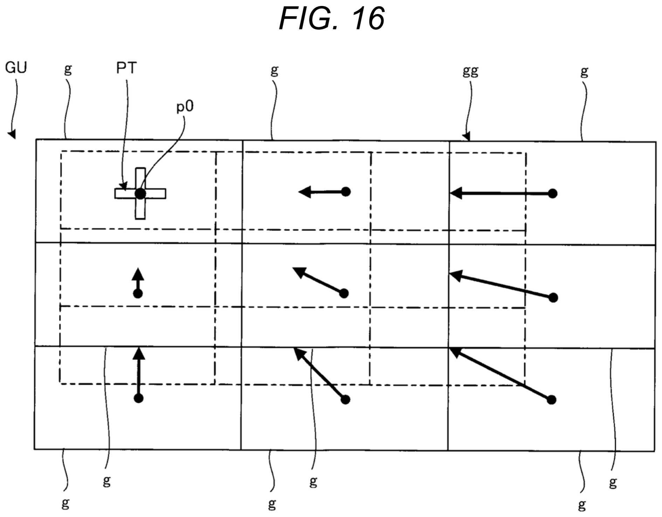

FIGS. 15 and 16 are diagrams illustrating input of the reference position P0 in the case in which the tiled image GG includes nine images. The user interface image GU illustrated in FIGS. 15 and 16 is the same as the user interface image GU illustrated in FIG. 11 or FIG. 12 except that the user interface image GU includes nine images g according to the number of images constituting the tiled image GG. FIG. 15 illustrates a state in which the image g in the center among the nine images g arrayed in three rows and three columns is selected. FIG. 16 illustrates a state in which the image g on the upper left among the nine images g arrayed in three rows and three columns is selected.

### 2-2. Modification 2

In the embodiment explained above, the aspect in which the user interface image GU is capable of designating any position in the tiled image GG is exemplified. However, the present disclosure is not limited to this aspect and the user interface image GU may include an image such as a list or a drop-down list in which one choice can be selected out of a plurality of choices of positions such as "upper right", "center", and "left".

The determination of the reference position P0 is not limited to the aspect in which the reference position P0 is optionally determined according to input from the user. For example, the reference position P0 may be automatically determined to be a position such as the center of the tiled image GG, the position of an image closest to the center of the tiled image GG among a plurality of images constituting the tiled image GG, or the position of an image at one end among the plurality of images constituting the tiled image GG according to a predetermined rule. When the reference position P0 is automatically determined, the reference position P0 may be determined such that a zoom adjustable range of the tiled image GG is as large as possible considering operation ranges of the optical zoom mechanism 15d-1 and the optical zoom mechanism 15d-2.

### 2-3. Modification 3

In the embodiment explained above, the aspect in which the first projector 10-1 controls the operation of the second projector 10-2 is exemplified. However, the present disclosure is not limited to this aspect and for example, the zoom function, the lens shift function, and the correction function of the projectors 10 may be executed by an external device such as the terminal device 30 or the server controlling the operation of each of the first projector 10-1 and the second projector 10-2.

### 2-4. Modification 4

In the embodiment explained above, the aspect in which the blend processing is performed is exemplified. However, the present disclosure is not limited to this aspect and the blend region R1 and the blend region R2 may be omitted. In this case, the positions and the shapes of the first image G1 and the second image G2 are only corrected.

### 2-5. Modification 5

In the embodiment explained above, the aspect in which the first shape information DS1 and the second shape information DS2 are acquired using the imaging device 17 of the first projector 10-1 is exemplified. However, the present disclosure is not limited to this aspect. For example, the first shape information DS1 and the second shape information DS2 may be acquired using the imaging device 17 of the second projector 10-2 instead of the imaging device 17 of the first projector 10-1 or in addition to the imaging device 17 of the first projector 10-1.

### 2-6. Modification 6

The program PR1 in the embodiment explained above may be provided in a state of being recorded on a computer-readable and non-transitory recording medium. The computer is, for example, the processing device 12 or the terminal device 30. The program PR1 in the embodiment explained above may be provided in a form of being downloaded from the server to the computer through a network.

### 3. Appendices

A summary of the present disclosure is appended below.

(Appendix 1) An image projection method including: projecting a tiled image onto a projection surface, the tiled image including a first image projected by a first projector and a second image projected by a second projector, a part of the second image overlapping the first image and another part of the second image not overlapping the first image; when the tiled image is projected onto the projection surface, acquiring first information for controlling an operation of a first optical zoom mechanism provided in the first projector; controlling the operation of the first optical zoom mechanism to a zoom amount corresponding to the first information; controlling an operation of a second optical zoom mechanism provided in the second projector to the zoom amount corresponding to the first information; and moving a position of one or both of the first image and the second image in a direction for offsetting a change in a distance between the first image and the second image due to the controlling the operation of the first optical zoom mechanism and the controlling the operation of the second optical zoom mechanism.

In the aspect of Appendix 1, even if the zoom amounts of the first optical zoom mechanism and the second optical zoom mechanism are changed, since the position of one or both of the first image and the second image is moved in the direction for offsetting the change in the distance between the first image and the second image due to the change, it is possible to maintain the tiled image. For this reason, it is possible to zoom the tiled image.

(Appendix 2) The image projection method described in Appendix 1, further including: generating, based on a position after the movement of the first image by the movement, first correction information for performing geometric correction on the first image; and generating, based on a position after the movement of the second image by the movement, second correction information for performing geometric correction on the second image.

In the aspect of Appendix 2, it is possible to maintain the shape of the first image on the projection surface by using the first correction information. It is possible to maintain the shape of the second image on the projection surface by using the second correction information.

(Appendix 3) The image projection method described in Appendix 2, further including: acquiring in advance first shape information indicating, in a case in which the first projector projects the first image with a plurality of control values indicating zoom amounts different from one another of the first optical zoom mechanism, shapes of the first image at the control values; and acquiring in advance second shape information indicating, in a case in which the second projector projects the second image with a plurality of control values indicating zoom amounts different from one another of the second optical zoom mechanism, shapes of the second image at the control values, wherein the generating the first correction information includes generating the first correction information based on a control value of the first optical zoom mechanism and the first shape information, and the generating the second correction information includes generating the second correction information based on a control value of the second optical zoom mechanism and the second shape information.

In the aspect of Appendix 3, by using the first correction information that is based on the control value of the first optical zoom mechanism and the first shape information, it is possible to maintain the shape of the first image on the projection surface even if the first image is zoomed. By using the second correction information that is based on the control value of the second optical zoom mechanism and the second shape information, it is possible to maintain the shape of the second image on the projection surface even if the second image is zoomed.

(Appendix 4) The image projection method described in Appendix 3, wherein the first shape information indicates shapes of the first image at a plurality of positions on the projection surface in a case in which the first image is projected from the first projector onto each of the positions, the second shape information indicates shapes of the second image at a plurality of positions on the projection surface in a case in which the second image is projected from the second projector onto each of the positions, the generating the first correction information includes generating the first correction information based on a position of the first image and the first shape information, and the generating the second correction information includes generating the second correction information based on a position of the second image and the second shape information.

In the aspect of Appendix 4, even if the position of the first image on the projection surface moves, it is possible to maintain the shape of the first image on the projection surface by using the first correction information. Even if the position of the second image on the projection surface moves, it is possible to maintain the shape of the second image on the projection surface by using the second correction information.

(Appendix 5) The image projection method described in Appendix 1 or 3, wherein the moving includes moving the position of one or both of the first image and the second image toward a reference position in the tiled image.

In the aspect of Appendix 5, it is possible to zoom the tiled image while maintaining the reference position of the tiled image.

(Appendix 6) The image projection method described in Appendix 5, further including receiving input indicating the reference position via a user interface image.

In the aspect of Appendix 6, it is possible to set the reference position of the tiled image according to a desire of a user.

(Appendix 7) A non-transitory computer-readable storage medium storing a program for causing at least one processor to execute: projecting a tiled image onto a projection surface, the tiled image including a first image projected by a first projector and a second image projected by a second projector, a part of the second image overlapping the first image and another part of the second image not overlapping the first image; when the tiled image is projected onto the projection surface, acquiring first information for controlling an operation of a first optical zoom mechanism provided in the first projector; controlling the operation of the first optical zoom mechanism to a zoom amount corresponding to the first information; controlling an operation of a second optical zoom mechanism provided in the second projector to the zoom amount corresponding to the first information; and moving a position of one or both of the first image and the second image in a direction for offsetting a change in a distance between the first image and the second image due to the controlling the operation of the first optical zoom mechanism and the controlling the operation of the second optical zoom mechanism.

In the aspect of Appendix 7, even if the zoom amounts of the first optical zoom mechanism and the second optical zoom mechanism are changed, since the position of one or both of the first image and the second image is moved in the direction for offsetting the change in the distance between the first image and the second image due to the change, it is possible to maintain the tiled image. For this reason, it is possible to zoom the tiled image.

(Appendix 8) An information processing apparatus including at least one processor configured to execute: projecting a tiled image onto a projection surface, the tiled image including a first image projected by a first projector and a second image projected by a second projector, a part of the second image overlapping the first image and another part of the second image not overlapping the first image; when the tiled image is projected onto the projection surface, acquiring first information for controlling an operation of a first optical zoom mechanism provided in the first projector; controlling the operation of the first optical zoom mechanism to a zoom amount corresponding to the first information; controlling an operation of a second optical zoom mechanism provided in the second projector to the zoom amount corresponding to the first information; and moving a position of one or both of the first image and the second image in a direction for offsetting a change in a distance between the first image and the second image due to the controlling the operation of the first optical zoom mechanism and the controlling the operation of the second optical zoom mechanism.

In the aspect of Appendix 8, even if the zoom amounts of the first optical zoom mechanism and the second optical zoom mechanism are changed, since the position of one or both of the first image and the second image is moved in the direction for offsetting the change in the distance between the first image and the second image due to the change, it is possible to maintain the tiled image. For this reason, it is possible to zoom the tiled image.

## Claims

1. An image projection method comprising:
projecting a tiled image onto a projection surface, the tiled image including a first image projected by a first projector and a second image projected by a second projector, a part of the second image overlapping the first image and another part of the second image not overlapping the first image;
when the tiled image is projected onto the projection surface, acquiring first information for controlling an operation of a first optical zoom mechanism provided in the first projector;
controlling the operation of the first optical zoom mechanism to a zoom amount corresponding to the first information;
controlling an operation of a second optical zoom mechanism provided in the second projector to the zoom amount corresponding to the first information; and
moving a position of one or both of the first image and the second image in a direction for offsetting a change in a distance between the first image and the second image due to the controlling the operation of the first optical zoom mechanism and the controlling the operation of the second optical zoom mechanism.

2. The image projection method according to claim 1, further comprising:
generating, based on a position after the movement of the first image by the movement, first correction information for performing geometric correction on the first image; and
generating, based on a position after the movement of the second image by the movement, second correction information for performing geometric correction on the second image.

3. The image projection method according to claim 2, further comprising:
acquiring in advance first shape information indicating, in a case in which the first projector projects the first image with a plurality of control values indicating zoom amounts different from one another of the first optical zoom mechanism, shapes of the first image at the control values; and
acquiring in advance second shape information indicating, in a case in which the second projector projects the second image with a plurality of control values indicating zoom amounts different from one another of the second optical zoom mechanism, shapes of the second image at the control values, wherein
the generating the first correction information includes generating the first correction information based on a control value of the first optical zoom mechanism and the first shape information, and
the generating the second correction information includes generating the second correction information based on a control value of the second optical zoom mechanism and the second shape information.

4. The image projection method according to claim 3, wherein
the first shape information indicates shapes of the first image at a plurality of positions on the projection surface in a case in which the first image is projected from the first projector onto each of the positions,
the second shape information indicates shapes of the second image at a plurality of positions on the projection surface in a case in which the second image is projected from the second projector onto each of the positions,
the generating the first correction information includes generating the first correction information based on a position of the first image and the first shape information, and
the generating the second correction information includes generating the second correction information based on a position of the second image and the second shape information.

5. The image projection method according to claim 1, wherein the moving includes moving the position of one or both of the first image and the second image toward a reference position in the tiled image.

6. The image projection method according to claim 5, further comprising receiving input indicating the reference position via a user interface image.

7. A non-transitory computer-readable storage medium storing a program for causing at least one processor to execute:
projecting a tiled image onto a projection surface, the tiled image including a first image projected by a first projector and a second image projected by a second projector, a part of the second image overlapping the first image and another part of the second image not overlapping the first image;
when the tiled image is projected onto the projection surface, acquiring first information for controlling an operation of a first optical zoom mechanism provided in the first projector;
controlling the operation of the first optical zoom mechanism to a zoom amount corresponding to the first information;
controlling an operation of a second optical zoom mechanism provided in the second projector to the zoom amount corresponding to the first information; and
moving a position of one or both of the first image and the second image in a direction for offsetting a change in a distance between the first image and the second image due to the controlling the operation of the first optical zoom mechanism and the controlling the operation of the second optical zoom mechanism.

8. An information processing apparatus comprising at least one processor configured to execute:
projecting a tiled image onto a projection surface, the tiled image including a first image projected by a first projector and a second image projected by a second projector, a part of the second image overlapping the first image and another part of the second image not overlapping the first image;
when the tiled image is projected onto the projection surface, acquiring first information for controlling an operation of a first optical zoom mechanism provided in the first projector;
controlling the operation of the first optical zoom mechanism to a zoom amount corresponding to the first information;
controlling an operation of a second optical zoom mechanism provided in the second projector to the zoom amount corresponding to the first information; and
moving a position of one or both of the first image and the second image in a direction for offsetting a change in a distance between the first image and the second image due to the controlling the operation of the first optical zoom mechanism and the controlling the operation of the second optical zoom mechanism.
